# FASCICULE DE BREVET EUROPEEN

(11) **EP 0 512 182 B1**
(45) Date de publication et mention de la délivrance du brevet: **10.07.1996**
(21) Numéro de dépôt: 91401222.4
(22) Date de dépôt: 10.05.1991
(51) Int. Cl.: G03G 15/00, G03B 27/62

(54) **Dispositif d'aide à la photocopie de livres perfectionné**
Hilfsvorrichtung zum Fotokopieren von Büchern
Aid device for photocopying books

(43) Date de publication de la demande: 11.11.1992
(60) Demande divisionnaire: 94201446.5
(73) Titulaire: Patinier, André, F-75015 Paris (FR)
(72) Inventeur: Patinier, André, F-75015 Paris (FR)

(56) Documents cités:
- FR-A- 2 650 409
- FR-A- 2 654 847
- JP-A-61 235 877
- PATENT ABSTRACTS OF JAPAN vol. 4, no. 90 (P-17)(572) 27 Juin 1980 & JP-A-55 52 073 (CANON K.K. ) 16 Avril 1980
- PATENT ABSTRACTS OF JAPAN vol. 13, no. 533 (P-967)(3881) 28 Novembre 1989 & JP-A-1 219 829 (FUJITSU LTD ) 1 Septembre 1989
- PATENT ABSTRACTS OF JAPAN vol. 13, no. 66 (P-828)(3414) 15 Février 1989 & JP-A-63 254 437 (SEIKO EPSON CORP ) 21 Octobre 1988

## Description

L'invention se rapporte au domaine de la vie quotidienne et plus particulièrement aux articles de bureau.

Les réalisations de dispositifs d'aide à la photocopie de livres,montrent que leurs concepteurs n'ont pas cherché à faire un objet petit,maniable,pratique pouvant servir sur la majorité des machines,pour tout type de livres,c'est à dire pouvant permettre la reproduction de ceux écrits très près de la fente centrale,avec une marge non lisible réduite de part et d'autre de ladite fente centrale,sans écarteler le livre,en permet--tant le maintien du livre bien en ligne et stable,c'est à dire comportant un véritable moyen de calage inoffensif pour le livre.

Le but du présent mémoire est d'exposer les solutions trouvées,à l'écart de la coûteuse voie des fibres optiques. La critique des réalisations existantes qui suit,permettra de comprendre,le comment et le pourquoi des caractéristiques de l'invention ainsi que les avantages qu'elle possède.

Hors les réalisations à base de fibres optiques,nous sommes en présence de gros plateaux,plus larges à leur base que le livre ouvert lui-même,et de hauteur supérieure à 20 mm.

Ces objets,outre leur encombrement ont tous un premier et grave défaut:ils ne peuvent pas servir sur les nombreuses machines qui photocopient flou à quelques millimètres seulement de la surface supérieure de leur vitre.Il faut donc réduire la hauteur du dispositif .Cette solution qui peut paraître évidente ,permet néammoins un résultat impossible auparavant ,la polyvalence et donc la transposabilité du dispositif d'une machine à une autre.

Cependant une réduction par changement d'échelle ne corrigerait pas leurs autres défauts,qui sont:
- que les faces supérieures sont complètement droites dans les demandes de brevets JP-A-60 176 030 et JP-A-61 22334, et le brevet US-A-3 712 729.La seule réduc-tion de ces plateaux prismatiques aboutit à laisser un espace entre les pages et la vitre, et la surface du dispositif ,aux pieds de ce dernier.Le résultat est qu'une mince bande de texte,parallèle à la fente centrale du livre est escamotée et gêne ou empêche alors la lecture et ceci tout le long de l'arête de l'angle aigu ayant pour côtés une face supérieure et la base de l'objet.Il faut donc une adaptation :rendre courbe la surface des faces supérieures,au moins aux pieds du dispositif.
- la forte valeur de l'angle au sommet Dans les deux références japonaises précitées,l'angle au sommet est trop large (115° ou 135°).Cela fait que pour un petit objet,le livre,dans la région du sommet ne colle pas au dispositif. Appuyer plus fort pour essayer que cela se produise. serait sans autre résultat que d'écarteler le livre,car il fente centrale ne repose pas sur sa fente centrale, mais sur les pages elles-mêmes au contact des faces supérieures,à une dizaine de millimètres environ de part et d'autre de l'axe de la fente centrale.De plus il y a risque que l'axe de la fente centrale ne soit pas parallèle à l'arête du sommet du dispositif à la fois verticalement et horizontalement (lacet et tangage).En bref le livre risque d'être abimé et n'est pas stable.C'est particulièrement le cas dans la demande de brevet JP-A-63 254 437 qui a un angle au sommet (estimé d'après la figure 1) de 120°et qui en plus ne possède pas d'arête en son sommet.Avec un tel profil il est hors de question de copier près de la fente centrale.

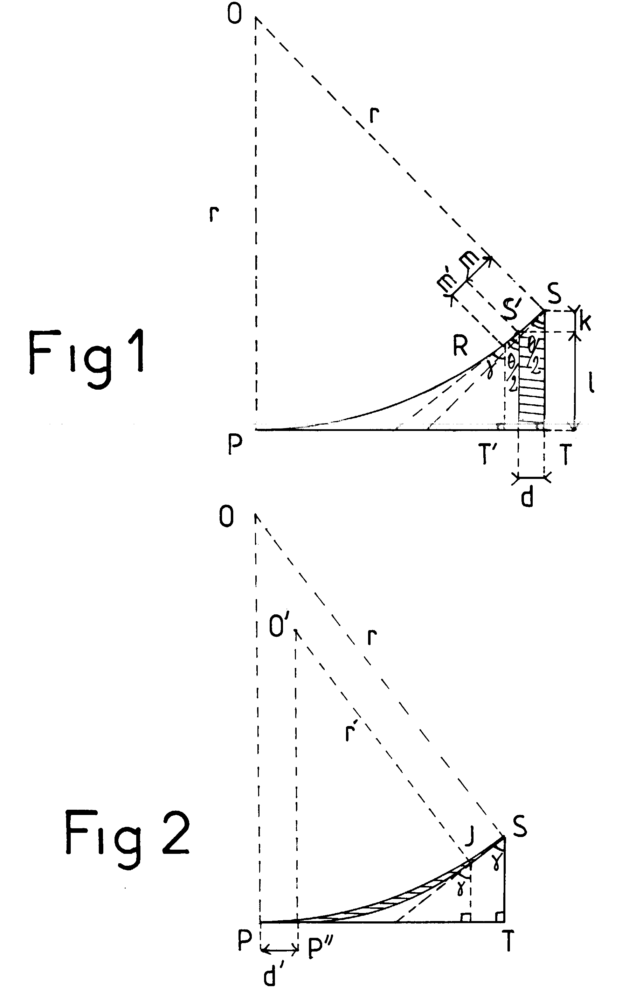

L'angle au sommet de la référence JP-A-55-52073,un autre gros plateau comme toutes les antériorités citées jusqu'à maintenant,a une valeur proche de ce qui est bon,et il a une surface courbe en arc de cercle. Sa hauteur de 4 à 5 cm,rend aussi impossible la copie de livres sur la majorité des copieurs.0n pourrait la réduire purement et simplement,mais alors,malgré une assez bonne valeur (100°) de l'angle au sommet,le livre continuera à être instable,parcequ'il n'y a pas de véritable moyen de calage.Pour en posséder un il faut réduire encore l'angle au sommet et introduire une rupture ou accélération de pente dans la région du sommet (cf notre figure 1),où l'on voit que toutes choses étant égales par ailleurs,cela permet en outre de gagner en largeur,en hauteur, et en marge lisible,donc en lisibilité et en maniabilité,car on atteint plus vite l'angle de lecture voulu (90°-γ).

Les objets des références I.B.M. Technical Disclosure Bulletin,vol. 15,no 3,page 781 (rappelée sous l'abréviation I.B.M. dans la suite) et JP-A-1-219 829,outre qu'elles sont à base de fibres optiques ont encore des défauts.

Ici au contraire leur angle au sommet est trop aigu;car de deux choses l'une:ou bien le dispositif a une certaine hauteur et la pression à exercer sur le dos des livres est faible et alors on peut garder un angle au sommet aigu,ou bien le dispositif est petit et alors il faut plus appuyer sur le dos des livres et l'arête du sommet rentre dans la fente centrale comme une lame.Dans ce cas en effet le livre repose sur sa fente centrale et une arête arrondie n'arrangerai pas les choses car la pression resterait quand même uniquement supportée par cette dernière. De plus les fibres optiques imposent une partie inutilisable,une marge assez importante,6 mm ou plus d'après nos mesures,correspondant à la surface non fibrée dans le haut de l'objet.

Enfin le profil de leur faces supérieures,n'est pas étudié pour tout livre:
- la référence I.B.M. décrit un objet dont les faces supérieures comprennent une partie droite suivie d'un arc de cercle de rayon très faible (5 mm de rayon pour une hauteur totale de l'objet de 15 mm(cf fig 1 de la référence)).0r d'après nos essais,il faut que les pages soient très souples pour suivre le profil du dispositif à ce niveau.En fait seul le papier "bible" convient vraiment.Cela limite considérablement l'utilisation du dispositif De plus la faiblesse du rayon du cercle rend désagréable la lecture. Pour la demande de brevet Japonais dont la marge non lisible est de 7,5 mm pour une hauteur de 14 mm de l'objet,même si on retirait les fibres optiques ,comme la zone fibrée commence à un point ou la tangeante à la surface des faces supérieures est inclinée entre 42°et 45° par rapport à l'horizontale,et comme cette valeur de l'angle d'inclinaison empêche la transmission lumineuse par réflexion totale interne pour beaucoup de matériaux transparents,la marge non lisible resterait sensiblement la même, le profil ,pourtant étudié,ne convient pas non plus pour tout type de livres:certains de papier fort et peu souple ont leurs pages qui s'inclinent peu par rapport à l'horizontale.Il est alors difficile de les copier car la surface des pages épouse assez mal dans ce cas celles des faces supérieures du dispositif,en particulier dans la région à mi-chemin des pieds et du sommet.

Pour finir notre critique des profils nous ferons remarquer que le profil en arc de cercle est également inadapté,parce qu'il consomme inutilement de la marge (cf notre fig.1) et ce d'autant plus que l'angle au sommet est aigu.Cela n'est pas dramatique pour un angle de 95° , mais alors le livre est mal calé car cet angle est un peu trop grand,et parce que cette valeur est théorique:pour un petit objet ,à faible distance de l'arête ,l'angle formé par les tangeantes aux faces supérieures est augmenté d'une valeur non négligeable(e.g. la valeur 100° est atteinte à 2 mm de part et d'autre de l'arête pour une hauteur au sommet de l'objet de 15 mm) et le calage du livre est mauvais.Alors de deux choses l'une ,ou bien on diminue l'angle au sommet pour un bon calage et l'on perd de la marge,ou bien on ouvre l'angle au sommet pour sauvegarder la lisibilité de la marge et alors le livre est mal calé.Notre solution consiste à sortir de ce dilemme,grâce à un angle au sommet plus faible que 95° et à une rupture ou accélération de pente dans la région du sommet,pour déboucher immédiatement après(e.g. la rupture) sur une surface garantissant la lisibilité,c'est à dire pas trop inclinée par rapport à l'horizontale.

Mais on peut encore faire mieux en introduisant immédiatement après la rupture ,un segment droit plutôt que directement passer à un arc de cercle,cf fig 2 où l'on voit ce que l'on peut gagner en largeur.L'encombrement et la maniabilité du dispositif en sont notablement améliorées.

C'est ce qui est fait dans la référence I.B.M. mais les faces supérieures y sont inclinées à 60° par rapport à l'horizontale.Or lorsque l'on supprime les fibres optiques ,il faut diminuer au moins jusqu'en dessous de l'angle de réflexion totale interne ,correspondant à l'indice de réfraction de la matière transparente utilisée,l'inclinaison des faces supérieures.Des essais montrent que la courbure des pages diminue et que donc il faut augmenter le rayon du cercle tangeant à la partie droite de la face supérieure et à la base du dispositif.

En plus de faire gagner de la place en largeur,l'introduction d'un segment droit dans le haut de l'objet permet l'aplatissement de la surface des pages et donc la lecture aisée immédiatement,au contraire d'une courbe qui suivrait celle naturelle des pages,dès le haut de l'objet car cette cour De ne serait suffisamment peu inclinée pour une bonne lecture qu'à quelques millimètres,précieux de marge,de part et d'autre de l'arête du dispositif. Le profil des faces supérieures du dispositif doit donc contraindre un tant soit peu les pages des livres ,dans la partie supérieure de l'objet.Cela ne veut pas dire que la concavité du profil des faces supérieures doive nécessairement aller en croissant du sommet vers la base.Il faut seulement qu'elle soit variable et que dans la partie supérieure du dispositif,on puisse immédiatement après la rupture de pente lire un texte photocopié.Dans la variante de réalisation exposée-plus loin la concavité ,en partant du sommet,est maximum entre le sommet et la base.Mais la concavité peut être croissante.

En résumé la critique des réalisations existantes nous a amené à doter notre dispositif ,de l'ensemble des caractéristiques suivantes:
une faible hauteur (en tout état de cause inférieure à 20 mm) un bon et un inoffensif moyen de calage du livre grâce à un angle au sommet compris entre 60° et 100° (80° dans la variante de réalisation ci-dessous exposée),une rupture ou une accélération de pente dans la région du sommet, un profil des faces supérieures à concavité variable du haut vers le bas, un angle d'inclinaison maximum de ses faces supérieures, immediatement après la rupture de pente compris entre 35° et 40°, ce dispositif étant formé d'une matière transparante sauf éventuellement le coin de calage.

Le coin de calage,au sommet,puisqu'il ne permet pas de trams-mettre l'image qui peut se trouver en dessous de lui,à sa verticale,peut être d'une matière différente de celle transparente utilisée pour le reste de l'objet,et se prolonger verticalement vers le bas.Fendu en deux dans son plan longitudinal médian,et articulé autour d'une charnière longitudinale à sa base,il peut permettre un meilleur rangement dans un étui afin de réduire encore son encombrement.En le fendant non plus longitudinalement,mais transversalement,en son milieu,toujours verticalement,et articulé autour d'une charnière selon cette fente,il peut servir comme objet long et asymètrique utile d'un côté seulement,ou comme objet court symétrique servant des deux côtés à la fois,dans sa position replié.Le matériau utilisé sera valablement du polypropylène.

Présentation des différentes variantes de réalisation.

Le choix de la valeur de 80° pour l'angle au sommet permet une bonne stabilité du livre sans l'écarteler et aussi sans le détériorer,car la pression exercée par l'utilisateur peut se répartir sur les faces de l'angle au sommet lui-même et non seulement sur l'arête.Dans ces conditions le coin de calage est bien différent de ce qui était appelé ergot de calage dans la demande de brevet FR-A-2 650 409 qui précisément préconisait un angle trop aigu et une arête large parce qu'arrondie.Tout le contraire de notre actuel coin de calage.Parmi les nombreuses variantes de réalisation possibles,nous décrirons un coin de calage avec des faces plates après la rupture de pente et du sommet vers le pied,un segment de droite suivi d'un arc de cercle tangeant,lui-même suivi d'un deuxième segment droit tangeant lui aussi à l'arc de cercle.

### Bref descriptif des figures.

La figure 1 est un schéma explicatif montrant par comparaison des profils, notamment le gain en marge près de la fente centrale d'un livre,grâce à une rupture de pente dans la région du sommet,dans la cas d'un profil en arc de cercle.
La figure 2 est un schéma explicatif montrant de même le gain en largeur grâce à l'introduction d'un segment droit au sommet dans le cas d'un profil initial en arc de cercle.
La figure 3 est un schéma explicatif intégrant les deux perfectionnements, rupture de pente et introduction d'un segment droit
La figure 4 est la description d'un profil complexe comprenant un segment droit,un arc de cercle tangeant et un deuxième segment droit,de la forme symétrique du dispositif avec un coin de calage en matière différente de la matière transparente utilisée ,et comportant une charnière longitudinale.
La figure 5 est une vue en perspective du dispositif en position dépliée montrant l'articulation du coin de calage autour de son axe vertical central Pour comprendre la figure 1,il faut avoir présent à l'esprit que la lisibilité du texte à copier est affectée par trois éléments:
   a)l'angle de réflexion totale interne ,égal à l'angle maximum d'inclinaison par rapport à l'horizontale,des faces supérieures
   b)l'angle d'inclinaison lui-même qui contracte le texte au fur et à mesure qu'il grandit.
   c)la hauteur maximum (1) au-delà de laquelle le texte devient flou compte-tenu de l'objectif de la photocopieuse.

Cette hauteur 1 est déterminée expérimentalement,l'angle maximum d'inclinaison (90°-γ) est déterminé au préalable selon la qualité de lisibilité que l'on veut.

Apartir de (90°-γ),on détermine l'angle au sommet θ pour un meilleur calage Sur la figure 1 on peut constater que :
l'angle au sommet S et l'angle au sommet S' égaux à θ/2 sont égaux entre eux et donc à une valeur choisie de 45° que le profil S-P de la face supérieure en arc de cercle est tangeant en R à une droite inclinée à 90°-γ par rapport à l'horizontale .

Pour un angle θ donné et un angle γ donné avec une hauteur 1 donnée elle aussi ,on gagne en dimensions la zône hachurée(le quadrilatère S-T-T'-S'),c'est-à-dire en largeur ,la distance d(T-T'),en hauteur la distance k,et en marge la valeur m(il reste encore un marge m'). Autrement dit l'introduction d'une rupture de pente en R permet de réduire à la fois le dispositif et la marge non lisible.

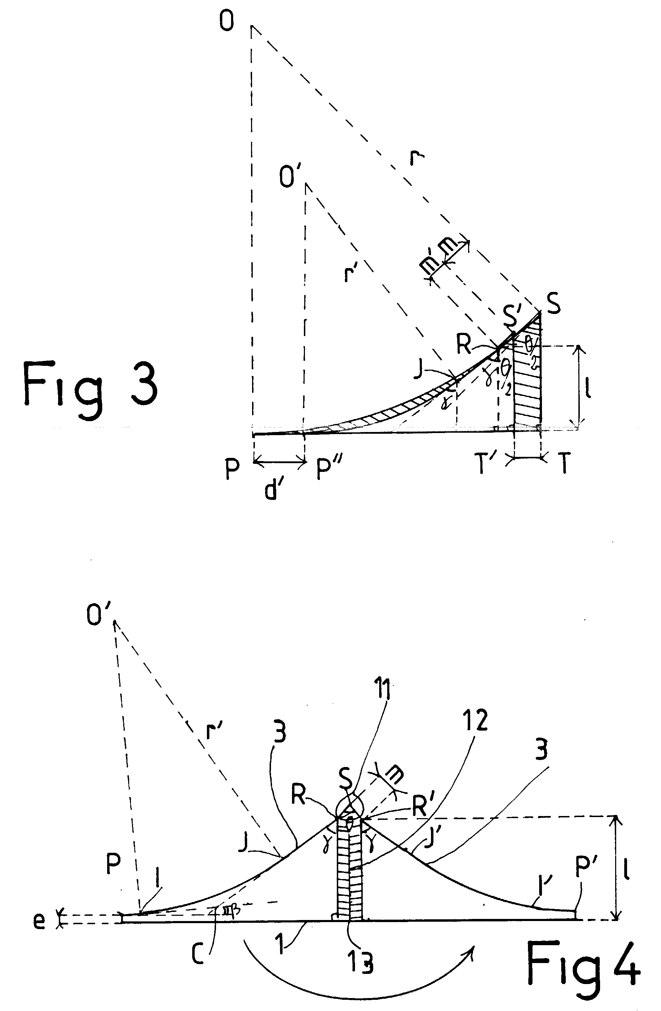

Sur la figure 2 à partir d'un angle γ donné on peut aussi constater que pour un profil en arc de cercle tout comme pour la figure précédente,l'introduction d'un segment droit S-J dans le profil S-P permet de supprimer toute la zone hachurée et donc de gagner en largeur la valeur d' (P-P'). La figure 3,intègre les deux modifications précédentes:rupture de pente en R et introduction du segment droit R-J (ici).

Sur la figure 4 , pour cette variante
γ=55° θ = 80° e=1mm m = 2 mm 1≃10 mm

Ces valeurs sont conformes à toutes nos exigences ,en particulier l'angle qui fait que l'inclinaison maximum de la face suDérieure dans sa partie lisible permet que le texte ne soit pas contracté de plus de 20% car cos(90°-γ)=cos 35° > 0,8.

Chaque face supérieure (3) (S-P) ou (S-P') se découpe en S-R ou S-R' et R-P ou R'-P' où R et R' sont respectivement les points de rupture de pente, l'angle 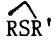 est égal à θ,soit ici 80°.La partie R-P ou R'-P'est ce que nous appelerons dans la suite et dans les revendications la"zone utile de la face supérieure"ou plus simplement la"zone utile",car tout ce qui se trouve à son contact est lisible.L'angle γ,de sommet R ou R',est le complément de l'angle d'inclinaison maximum de cette zone utile. Comme ici cet angle d'inclinaison maximum est 35° ,il se trouve 75°en dessous de l'angle de réflexion totale interne pour du P.M.M.A..Sa valeur pourrait pour la même matière être augmentée jusqu'à 40° mais guère au-delà,une marge de sécurité devant être conservée,le phénomène de réflexion totale interne n'étant pas aussi brusque dans la pratique que les chiffres ne le laissent entendre.La zone utile (R-P ou R'P')de chaque face supérieure (3),se découpe elle-même en R-J ou R'-J',le premier segment droit,en J-I ou J'-I' l'arc de cercle et en I-P ou I'-P' le deuxième segment droit,dont le rôle est de raccourcir encore le dispositif et de renforcer un peu l'arête (4) aux pieds du dispositif ,arête (4) qui a une épaisseur "e".L'angle que fait P-I avec la base (1) est β.C'est le point d'intersection du prolongement du côté P-I de l'angle β avec le prolongement du côté R-J de l'angle γ,la valeur du rayon O-J du cercle tangeant est R=C-J/tg((90°-γ -β)/2).Connaissant la largeur de la base (1),la valeur de l'angle θ de sommet P,la valeur de la première partie droite ,R-J,en plus des valeurs données plus haut,on peut facilement calculer la valeur du rayon du cercle tangeant,en connaissant aussi P-I toutefois,en se servant de la valeur de l'angle 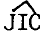 et du segment I-J.La valeur du rayon pour l'autre partie du dispositif est la même par raison de symètrie.

Dans l'exemple précédent nous venons de décrire un objet performant dont la marge non lisible est réduite à 2 mm.

En ce qui concerne le profil de la zone utile des faces supérieures ,des courbes mathématiques sont utilisables,genre exponen-tielles,hyperboles etc...dont la concavité varie de la même façon,c'est à dire qu'elles commencent toutes par une partie plate ou quasi-plate débutant au point de rupture de pente pour se prolonger par une courbe finale ou tangeante à une droite dont l'inclinaison par rapport à l'horizontale est faible.

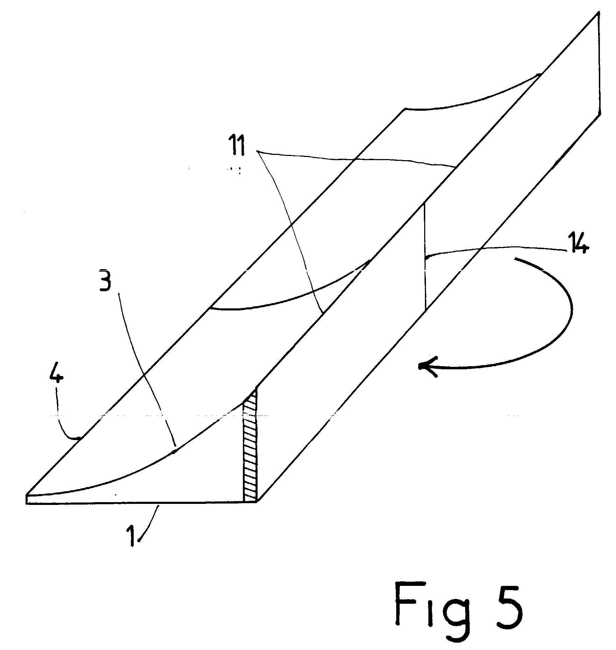

Pour réduire encore l'encombrement de l'objet tout en lui conservant son utilité dans de nombreux cas ,un perfectionnement a été trouvé.0n se reportera aux figures 4 et 5 pour en prendre connaissance.

A cet effet, on a découpé le coin de calage,soit longitudinalement cf figure 4 soit transversalement cf figure 5 .Le coin de calage prolongé vers le bas est la zone hachurée (11).Sur la figure 4,en (12) on voit la fente et la charnière en (13).Le dépliement du dispositif pour le ranger se fait par un mouvement de rotation selon la flèche.

Sur la figure 5 l'axe de rotation et la charnière sont en (14) L'objet,en position dépliée est asymètrique et ne comporte pas de pied de stabilité dans cette version peu perfectionnée.Néammoins l'avantage est que pour une longueur donnée l'objet est moins encombrant que s'il était symètrique tout en pouvant servir aussi pour des livres plus petits en position replié et cela n'est pas négligeable quand on connait le coût d'une copie.

Il est important que le coin de calage ne soit pas fixé au(x) bloc(s) de matière transparente par collage,car ce dernier a pour effet d'absorber de la lumière et cela est préjudiciable à la qualité de la copie.

## Revendications

1. Dispositif d'aide à la photocopie de livres comprenant une base (1) et deux faces supérieures (SP,SP') formant un sommet S, à glisser sous la partie centrale d'un livre retourné, le dispositif étant symétrique par rapport à son plan vertical longitudinal central, caractérisé en ce que sa hauteur au sommet est inférieure à 20 mm et en ce que son sommet a un angle compris entre 60° et 100° et constitue un coin de calage (11) et en ce que le profil de ces faces supérieures comprend une rupture ou une accélération de pente ( R,R') dans la région du sommet et en ce que l'angle d'inclinaison maximum de ses faces supérieures, immédiatement après la rupture de pente est compris entre 35° et 40°, ce dispositif étant formé d'une matière transparente sauf éventuellement le coin de calage.

2. Dispositif selon la revendication 1, caractérisé en ce que la portion (R-J, R'-J') de chaque face supérieure (S-P, S-P') qui se trouve immédiatement après la rupture de pente, est plate.

3. Dispositif selon la revendication 1, caractérisé en ce que son coin de calage (11) est d'une matière différente de la matière transparente utilisée et en ce que ledit coin de calage qui se prolonge du sommet à la base, est fendu en deux selon son plan vertical longitudinal central, tout en restant articulé autour d'une charnière verticale (14) ou horizontale (13).

## Patentansprüche

1. Vorrichtung um Photokopie von Büchern zu hilfen mit einer Grunglage (1) und zwei Oberfläche (SP,SP') die einen Gipfel bilden,die unter einem umdre-hende Buch geschoben ist,die Vorrichtung seiend symmetrisch hinsichtlich der zentrallen lotrechten Längsfläche,dadurch gekennzeichnet,dass ihre Höhe weniger als 20 mm ist,und dass ihrer Gipfel hat einen Winkel zwischen 60° und 100° und macht einen Befestigung Keil (11) aus,und dass der Profil der Oberfläche,wie einen Bruch oder eine Beuschleunigung (R,R') der Abhang in der Zone des Gipfels,macht und dass der höchte Winkel der Abfall ihre Obere-fläche,sofort nach dem Bruch der Abhang zwischen 35° und 40° ist,die Vorrichtung seiend,aus durchsichtige Materie gemacht ausser möglicherweise der Befestigungskeil.

2. Vorrichtung laut Anspruch 1 dadurch gekennzeichnet dass,der Teil (R-J,R'-J') jener Oberfläche (SP-SP') der sofort nach dem Bruch der Abhang steht,flach ist.

3. Vorrichtung laut Anspruch 1 dadurch gekennzeichnet, dass ihrer Befestigungs-keil (11) aus einer anderen Materie der dursichtige Materie benützt,gemacht ist und dass der genannte Befestigungskeil der sich von dem Gipfel zu der Grundlage hinzieht,gemäss seiner lotrechter zentraller Längsfläche splittert ist,und um einem lotrechten (14) oder um einem waagrechten (13) Scharnier verbunden ist

## Claims

1. A photocopying books aid,comprising a bottom (1) and two upper faces (SP,SP') shaping a summit "S" to be placed under the central part of a re-turned book,the aid being symmetrical with respect to her central longi-tudinal vertical plane characterized in that her height at the summit is less than 20 mm and in that her summit has an angle's value comprised between 60° and 100° and forming a steadying corner (11),and characterized in that the profile of the upper faces comprises a breaking or an acceleration (R,R') of inclination in the summit area ,and in that the maximum value of the angle of inclination of the said upper faces is comprised between 35° and 40°,the aid being made of transparent material except possibly the steadying corner.

2. Aid along claim 1 characterized in that the part (R-J,R'-J'),of each of the upper faces (S-P,S-P'),that is immediatly after the breaking of the inclination,is flat.

3. An aid as described in claim 1 characterized in that her steadying corner (11) is made of a different material from the transparent put to use,and in that the said steadying corner that is extended from the summit to the bottom is split along its longitudinal vertical plane but remains linked by a hinge that can be vertical (14) or horizontal (13).
